# FASCICULE DE BREVET EUROPEEN

(11) **EP 1 115 818 B1**
(45) Date de publication et mention de la délivrance du brevet: **12.05.2004**
(21) Numéro de dépôt: 99943006.9
(22) Date de dépôt: 20.09.1999
(51) Int. Cl.: C11B 9/00

(54) **CONCENTRE HYDROSOLUBLE OBTENU A PARTIR D'UNE PHASE EMULGATRICE OU HYDROSOLUBILISANTE ET D'UN COMPLEXE DE MATIERES LIPOPHILES LIQUIDES D'ORIGINE VEGETALE**
WASSERLÖSLICHES KONZENTRAT, WELCHES AUS EINER EMULGIERTEN PHASE ODER EINER WASSERLÖSLICHEN PHASE UND EINEM KOMPLEX AUS LIPOPHILEN FLÜSSIGEN MATERIALIEN PFLANZLICHEN URSPRUNGS GEWONNEN WIRD
WATER-SOLUBLE CONCENTRATE OBTAINED FOR AN EMULGATOR OR WATER-SOLUBILISING PHASE AND A COMPLEX OF LIQUID LIPOPHILE SUBSTANCES OF PLANT ORIGIN

(30) Priorité: 21.09.1998 FR 9811833
(43) Date de publication de la demande: 18.07.2001
(73) Titulaire: Auberger, Gérard, 88100 Neuvillers sur Fave (FR); Auberger, Stéphane, 88100 Neuvillers sur Fave (FR)
(72) Inventeur: Auberger, Gérard, 88100 Neuvillers sur Fave (FR); Auberger, Stéphane, 88100 Neuvillers sur Fave (FR)
(74) Mandataire: Metz, Paul
(86) Numéro de dépôt international: PCT/FR1999/002229
(87) Numéro de publication internationale: WO 2000/017294

(56) Documents cités:
- DE-A- 3 432 219
- FR-A- 2 340 981
- FR-A- 2 372 226
- FR-A- 2 663 846
- GB-A- 2 297 557

## Description

La présente invention se rapporte à un concentré hydrosoluble obtenu à partir d'une nouvelle phase émulgatrice ou hydrosolubilisante et d'un complexe de matières lipophiles liquides d'origine végétale notamment d'huiles essentielles ou végétales.

Ce concentré est utilisé directement après dilution par l'eau ou sert d'additif ou d'adjuvant à des formulations diverses de produits à propriétés assainissantes, désodorisantes, désinfectantes, bactéricides, stérilisantes, insecticides, d'activateur biologique ou toute autre.

On connaît déjà dans la préparation des concentrés émulsionnables contenant des matières lipophiles liquides, l'utilisation d'un ou de plusieurs tensioactifs d'origine végétale additionnés de sels non biodégradables du type sulfates, sulfonates ou phosphates, phosphonates nuisibles pour l'environnement.

On connaît également le brevet FR 2.372.226 au nom de CHEVRIER qui décrit un procédé permettant de rendre hydrosoluble une huile essentielle ou un complexe de ces huiles au moyen d'un mélange de deux tensioactifs :
. un tensioactif liquide non ionique constitué d'un alcool polyéthoxylé ; et
. un tensioactif anionique de type sulfate, sulfonate, ester d'acide gras α-sulfonique, savon alcalin d'acide gras, sel de base organique ou amidon modifié.

Les tensioactifs utilisés dans le brevet CHEVRIER sont des tensioactifs chimiques avec des fonctions, de type sulfate ou sulfonate par exemple, nocives pour l'environnement. Ces substances sont toxiques et présentent une mauvaise biodégradabilité.

De plus, ces préparations conduisent à des produits opaques et à caractère essentiellement instable les rendant impropres au stockage.

Il n'est donc pas envisageable d'utiliser ces produits dans une quelconque application industrielle.

Les inventeurs ont imaginé un concentré hydrosoluble obtenu à partir d'une nouvelle phase émulgatrice ou hydrosolubilisante et d'un complexe de matières lipophiles liquides d'origine végétale notamment d'huiles essentielles ou végétales, concentré utilisable directement après dilution par l'eau.

Ce concentré hydrosoluble ou émulsionnable est caractérisé par la composition suivante :
. un complexe d'au moins une mais de préférence deux matières lipophiles liquides d'origine végétale notamment d'huiles essentielles ou végétales ;
. un mélange émulsifiant ou hydrosolubilisant contenant au moins deux tensioactifs écologiquement optimisés afin de présenter une écotoxicité réduite et de ce fait ne comprenant aucun groupement sulfate, sulfonate, phosphate ou phosphonate, dont au moins :
   - un tensioactif non ionique provenant ou dérivé d'une huile végétale, et
   - au moins un co-tensioactif non ionique et/ou un tensioactif anionique provenant ou dérivé d'une autre huile végétale,
dont la combinaison avec les matières végétales lipophiles liquides non hydrosolubles notamment les huiles essentielles ou végétales rend ces dernières parfaitement hydrosolubles ou émulsionnables permettant après addition d'eau l'obtention d'une émulsion parfaitement stable du type microémulsion.

Le tensioactif non ionique dérivé d'une huile végétale est préférentiellement une huile végétale éthoxylée.

De même, le tensioactif anionique supplémentaire est de préférence un dérivé d'une autre huile végétale éthoxylée. Il s'agit par exemple d'un mélange de sels d'alkyl éthoxy carboxylique résultant d'une réaction d'éthoxylation et de carboxylation sur des huiles végétales.

La présente invention résulte des cinq buts suivants.

Le premier but est de ne pas dénaturer les propriétés et qualités d'origine des matières lipophiles notamment des huiles essentielles ou des essences végétales.

Le deuxième but est de fournir une composition présentant une ou des propriétés spécifiques supplémentaires à celles provenant des matières lipophiles liquides notamment des huiles essentielles utilisées.

Le troisième but est un procédé de préparation particulièrement simple, rapide et efficace pour émulsionner des matières liquides lipophiles d'origine végétale dans une phase aqueuse en vue de l'obtention d'une microémulsion présentant les propriétés et qualités provenant des produits initiaux conjointement à celles provenant du mélange avec les tensioactifs.

Le quatrième but est l'utilisation d'au moins un composé tensioactif d'origine végétale en proportion relativement élevée par rapport à l'autre ou aux autre(s) composé(s) tensioactif(s), ces composés étant utilisés en grandes quantités par rapport aux matières lipophiles liquides non hydrosolubles d'origine végétale pour apporter leurs propriétés propres. les proportions relatives en poids entre la phase émulgatrice ou hydrosolubilisante et le complexe de matières lipophiles d'origine végétale notamment d'huiles essentielles sont par exemple d'au moins de 2 à 1.

Le dernier but est essentiellement écologique dans un respect total encore non égalé de l'environnement grâce à des substances d'origine végétale parfaitement biodégradables en faible concentration dans une phase aqueuse à pH neutre.

Le principal avantage de l'invention consiste à réaliser facilement et rapidement avec un rendement maximal à partir de matières lipophiles liquides d'origine végétale notamment d'huiles dites essentielles ou d'huiles végétales des microémulsions parfaitement stables par simple addition d'eau.

Les autres avantages énoncés de façon non exhaustive sont les suivants :
. obtention d'une solution aqueuse d'aspect fluide, transparent et isotrope avec une parfaite stabilité dans le temps au cours d'un très long stockage, même avec des variations de température ambiante importantes ou un changement des conditions physico-chimiques d'usage,
. conservation fidèle des qualités et propriétés des matières lipophiles liquides d'origine végétales notamment des huiles essentielles ou végétales avec une rémanence accrue (bactéricides, bactériostatiques, fongicides, antiseptiques, désodorisantes par suppression de la cause des mauvaises odeurs, oxygénantes, oxydantes ou réductrices, anti-parasitaires, insecticides, nettoyantes et dégraissantes, etc....), grâce à une encapsulation adéquate des huiles essentielles ou végétales par les molécules de la phase émulgatrice ou hydrosolubilisante décrite,
. écotoxicité extrêmement faible et biodégradabilité optimisée, et innocuité pour l'homme et l'animal grâce à l'utilisation de matières d'origine végétale et une encapsulation appropriée des huiles essentielles ou végétales.
Effectivement, les formulations hydrosolubilisantes ou émulgatrices sont biodégradables et les métabolites issus de la première dégradation sont eux-mêmes bio-acceptables et totalement dégradés en dérivés naturels. Après usage, cette biodégradabilité s'effectue dans un laps de temps relativement court du point de vue environnement et écologie.
Il a été, par ailleurs, constaté que ces formulations sont non toxiques par ingestion et non irritantes pour la peau et les yeux.
. important pouvoir mouillant, détergent et assainissant de la microémulsion des huiles essentielles ou essences végétales en phase aqueuse,
. mise en oeuvre particulièrement simple, efficace et rapide par des moyens ne nécessitant pas d'équipement coûteux et ne consommant que peu d'énergie.

L'invention sera décrite ci-après en utilisant plusieurs exemples avec indication du dosage pondéral.

### Exemple n° 1 : application détergente-assainissante :

On prépare une phase émulgatrice ou hydrosolubilisante dans une enceinte en un matériau chimiquement inerte par mélange sous agitation des composés suivants en respectant les proportions ci-dessous :
. huile de ricin éthoxylée pour 50 à 70 %
. propylène glycol pour 20 à 5 %
. sels d'alkyl éthoxy carboxylique pour 10 à 45 %

Ces sels résultent d'une réaction d'éthoxylation et de carboxylation sur des huiles végétales.

En substitution de l'huile de ricin on peut utiliser toute autre huile végétale comportant un radical (OH) libre susceptible d'être éthoxylée.

Après avoir mûri, ce mélange émulsifiant ou hydrosolubilisant est incorporé sous agitation à un complexe d'huiles essentielles dans une proportion relative de 5 % à 30 % d'huiles essentielles pour une hydrophylisation de ces matières végétales non hydrosolubles.

Ce complexe renferme plusieurs huiles essentielles choisies dans le groupement des essences de romarin, d'eucalyptus, de menthe, de cannelle, de pin, d'armoise, d'origan, de sarriette.

Afin de rester complet dans la description, un exemple de composition en pondérale est donné ci-après:
. essence de romarin 15 % à 25 %
. essence d'eucalyptus 5 % à 15 %
. essence de menthe 10 % à 5 %
. essence de cannelle 5 % à 15 %
. essence de pin 15 % à 25 %
. essence d'armoise 40 % à 10 %
. essence d'origan 5 % à 3 %
. essence de sarriette 5 % à 2 %

Après agitation suffisante, on laisse reposer ce concentré émulsionnable pendant 24 heures à température ambiante c'est-à-dire comprise entre 15°C et 30°C.

Pour l'obtention d'une solution aqueuse parfaitement stable, ce concentré émulsionnable est ensuite dilué avec de l'eau dans une proportion de 1 à 45 % de concentré pour 99 % à 55 % d'eau.

Pour l'obtention d'autres formes physiques la dilution est notablement plus faible de 60% à 20%.

Pour l'obtention d'une gelée élastique, le pourcentage de dilution est compris entre 1 et 20 % d'eau.

Pour l'obtention d'une pâte semi-liquide ou d'un liquide visqueux, la dilution augmente et se situe entre 20 et 30 % d'eau.

### Exemple n°2 : application désodorisante

A la phase lipophile suivante :
. 25 % de complexe d'huiles essentielles choisies parmi l'essence d'orange, l'essence de citron, l'essence d'eucalyptus, l'essence de menthe,
   on ajoute dans une enceinte en acier inoxydable, la phase émulgatrice suivante, qui aura été auparavant mélangée et mûrie,
. 63 % d'huile de ricin éthoxylée ou toute autre huile végétale à radical (OH) libre pouvant être éthoxylée,
. 12 % de propylène glycol.

On laisse reposer ce concentré émulsionnable ou hydrosoluble environ 24 heures à température ambiante.

Ensuite, ce concentré émulsionnable ou hydrosoluble est additionné sous agitation en faible quantité à de l'eau, en dilution par exemple dans des proportions respectives de 0,5 % à 5 % de concentré pour 99,5 % à 95 % d'eau.

La solution aqueuse désodorisante est immédiatement prête à l'emploi.

Un exemple de constituants de la phase lipophile et de leur dosage minimal en poids est donné ci-après à titre d'exemple :
. essence d'orange au moins 40 %
. essence de citron au moins 10 %
. essence d'eucalyptus au moins 8 %
. essence de menthe au moins 1 %

### Exemple n° 3 : application d'activateur biologique

Dans une enceinte en acier inoxydable, on prépare par mélange le complexe végétal suivant :
. 20 % de complexe d'huiles essentielles choisies parmi les essences de cyprès, sarriette, pin, clou de girofle, menthe, eucalyptus, romarin, thym,
. 10 % d'huile végétale de colza

Puis, on ajoute avec précaution tout en agitant régulièrement :
. 50 % d'huile de ricin éthoxylée ou toute autre huile végétale à radical (OH) libre pouvant être éthoxylée,
. 20 % de sels d'alkyl éthoxy carboxylique résultant d'une réaction d'éthoxylation et de carboxylation sur des huiles végétales.

On laisse reposer ce concentré émulsionnable ou hydrosoluble environ 24 heures à température ambiante.

Ensuite, ce concentré émulsionnable ou hydrosoluble est additionné sous agitation à de l'eau en quantité suffisante dans un rapport de dilution de 3 % à 45 % de concentré pour 97 % à 55 % d'eau.

La solution aqueuse fluide présentant des propriétés d'activateur biologique est prête à l'emploi.

En ce qui concerne l'obtention des différentes formes physiques, les pourcentages de dilution sont voisins ou identiques à ceux indiqués précédemment.

### Exemple n° 4 : application en répulsif d'insectes

Dans une enceinte en acier inoxydable, on ajoute à la phase lipophile suivante :
. 25 % de complexe notamment d'huiles essentielles choisies parmi les essences de camphre, lavande, romarin, citronnelle, tagette, eucalyptus, oeillet, cèdre, menthe, pyrèthre naturelle,
   la phase émulgatrice suivante qui aura été auparavant mélangée et laissée reposer pendant quelques heures
. 63 % d'huile de ricin éthoxylée ou toute autre huile végétale à radical (OH) libre pouvant être éthoxylée,
. 12 % de propylène glycol.

On laisse reposer ce concentré émulsionnable ou hydrosoluble environ 24 heures à température ambiante.

Ce concentré émulsionnable ou hydrosoluble est ensuite additionné à de l'eau dans un rapport de dilution de 1 % à 45 % de concentré pour 99 % à 55 % d'eau sous agitation pour obtenir une solution aqueuse fluide et limpide présentant une propriété de répulsif d'insectes et immédiatement prête à l'emploi.

A titre d'exemple non limitatif, on indique ci-après les quantités minimales de chacun des composants :
. essence d'eucalyptus au moins 8 %
. essence de citronnelle au moins 8 %
. essence de romarin au moins 8 %
. essence de lavande au moins 10 %
. essence de camphre au moins 8 %
. essence de pyrèthre au moins 1 %
. essence de tagette au moins 10 %
. essence d'oeillet au moins 8 %
. essence de cèdre au moins 8 %
. essence de menthe au moins 2 %

Dans le cadre de cette invention, un grand nombre de variantes sont possibles en modifiant la composition du mélange des matières lipophiles liquides d'origine végétale notamment d'huiles essentielles et la nature ainsi que le nombre et les proportions des tensioactifs.

On a décrit ci-dessus à chaque fois une dilution par l'eau dans des rapports importants. Comme indiqué, on peut selon le cas additionner une faible quantité d'eau ( par exemple d'environ 1 % à 20 % d'eau) pour obtenir un gel ou une quantité d'eau un peu plus importante (par exemple d'environ 20 % à 30 % d'eau ) pour obtenir une pâte semi-liquide. Il s'agit cependant de simples changements de forme physique. Avec une dilution plus importante on obtient une émulsion (avec par exemple environ 30 % à 55 % d'eau) ou une solution aqueuse fluide, isotrope, transparente et claire (par exemple pour environ 55 % à 99 % d'eau).

## Revendications

1. Concentré hydrosoluble ou émulsionnable de matières lipophiles liquides d'origine végétale **caractérisé en ce qu'**il est obtenu par le mélange d'un complexe de matières lipophiles liquides d'origine végétale et d'une phase émulgatrice ou hydrosolubilisante contenant au moins deux tensioactifs écologiquement optimisés afin de présenter une écotoxicité réduite et de ce fait ne comprenant aucun groupement sulfate, sulfonate, phosphate ou phosphonate, dont au moins un tensioactif non ionique provenant ou dérivé d'une huile végétale et au moins un tensioactif supplémentaire comprenant un tensioactif anionique provenant ou dérivé d'une huile végétale et/ou un co-tensioactif non ionique, dont la combinaison avec les matières lipophiles liquides d'origine végétale rend ces dernières parfaitement hydrosolubles permettant après addition d'eau l'obtention d'une pâte, microémulsion ou solution parfaitement limpide et stable.

2. Concentré selon la revendication 1 **caractérisé en ce que** le complexe de matières lipophiles liquides d'origine végétale comprend au moins une huile essentielle.

3. Concentré selon la revendication 1 **caractérisé en ce que** le tensioactif non ionique provenant ou dérivé d'une huile végétale est une huile végétale éthoxylée.

4. Concentré selon la revendication précédente **caractérisé en ce que** l'huile végétale utilisée est de l'huile de ricin ou toute autre huile végétale à radical (OH) libre apte à être éthoxylée.

5. Concentré selon la revendication précédente **caractérisé en ce que** le tensioactif anionique provenant d'une huile végétale est dérivé d'une huile végétale éthoxylée.

6. Concentré selon la revendication 1 **caractérisé en ce que** le tensioactif supplémentaire anionique est un mélange de sels d'alkyl éthoxy carboxylique résultant d'une réaction d'éthoxylation et de carboxylation sur des huiles végétales.

7. Concentré selon la revendication 1 **caractérisé en ce que** le co-tensioactif non ionique est un polyol ou un alcool.

8. Concentré selon la revendication précédente **caractérisé en ce que** le co-tensioactif non ionique est du propylène glycol.

9. Concentré selon la revendication 1 **caractérisé en ce que** les proportions relatives en poids entre la phase émulgatrice ou hydrosolubilisante et le complexe de matières lipophiles d'origine végétale sont d'au moins de 2 à 1.

10. Gelée élastique obtenue par dilution à l'eau du concentré selon l'une des revendications précédentes par ajout d'eau dans des proportions de 80 % à 99 % de concentré pour respectivement 20 % à 1 % d'eau.

11. Pâte semi-liquide obtenue par dilution à l'eau du concentré selon l'une des revendications précédentes par ajout d'eau dans des proportions de 70 % à 80 % de concentré pour respectivement 30 % à 20 % d'eau.

12. Emulsion obtenue par addition d'eau au concentré selon l'une quelconque des revendications précédentes dans des proportions de 45 % à 70 % de concentré pour respectivement 55 % à 30 % d'eau.

13. Solution aqueuse fluide isotrope transparente et claire obtenue par dilution à l'eau du concentré selon l'une des revendications précédentes par ajout d'eau dans des proportions de 1 % à 45 % de concentré pour respectivement 99 % à 55 % d'eau.

## Patentansprüche

1. Wasserlösliches oder emulgierbares Konzentrat von lipohilen, flüssigen Stoffen pflanzlicher Herkunft **dadurch gekennzeichnet, dass**
es durch die Mischung eines Komplexes aus lipophilen, flüssigen Stoffen pflanzlicher Herkunft und einer emulgierenden oder wasserlöslichen Phase erzielt wird, wobei die emulgierende oder wasserlösliche Phase um eine verminderte Ökotoxizität zu erlangen mindestens zwei ökologisch optimierte Tenside enthält und deshalb keine Sulfat-, Sulfonat-, Phosphatoder Phosphonatgruppen aufweist, wobei die emulgierende oder wasserlösliche Phase mindestens ein nichtionisches Tensid aus einem pflanzlichen Öl oder aus einem Derivat eines pflanzlichen Öls und mindestens ein zusätzliches Tensid, das ein anionisches Tensid aus einem pflanzlichen Öl oder aus einem Derivat eines pflanzlichen Öls und/oder ein nichtionisches Kotensid umfasst, aufweist, wobei deren Verbindung mit den lipophilen, flüssigen Stoffen pflanzlicher Herkunft letztere vollständig wasserlöslich macht, wodurch nach Hinzufügung von Wasser eine klare und stabile Paste, Mikroemulsion oder Lösung erzielt wird.

2. Konzentrat nach Anspruch 1 **dadurch gekennzeichnet, dass**
der Komplex aus lipophilen, flüssigen Stoffen pflanzlicher Herkunft mindestens ein etherisches Öl umfasst.

3. Konzentrat nach Anspruch 1 **dadurch gekennzeichnet, dass** das nichtionische Tensid aus einem pflanzlichen Öl oder aus einem Derivat eines pflanzlichen Öls ein ethoxyliertes pflanzliches Öl ist.

4. Konzentrat nach dem vorangehenden Anspruch **dadurch gekennzeichnet, dass** das benutzte pflanzliche Öl Ricinöl oder ein beliebig anderes, für die Ethoxylierung geeignetes, pflanzliches Öl mit einem freien Radikal (OH) ist.

5. Konzentrat nach dem vorangehenden Anspruch **dadurch gekennzeichnet,**
**dass** das anionische Tensid aus einem pflanzlichen Öl ein Derivat eines ethoxylierten pflanzlichen Öls ist.

6. Konzentrat nach Anspruch 1 **dadurch gekennzeichnet, dass** das zusätzliche anionische Tensid eine Mischung von alkyl-ethoxyl und carboxyl Salzen ist, die aus dem Äthoxylierungs- und Carboxylationsprozess auf pflanzliche Öle hervorkommt.

7. Konzentrat nach Anspruch 1 **dadurch gekennzeichnet dass** das nichtionische Kotensid ein Polyalkohol oder ein Alkohol ist.

8. Konzentrat nach dem vorangehenden Anspruch **dadurch gekennzeichnet dass** das nichtionische Kotensid Glykolpropylen ist.

9. Konzentrat nach Anspruch 1 **dadurch gekennzeichnet dass** zwischen der emulgierenden oder wasserlöslichen Phase und dem Komplex aus lipophilen Stoffen pflanzlicher Herkunft die Verhältnisse in Bezug auf Gewicht wenigstens von 2 zu 1 sind.

10. Elastisches Gelee, erhalten durch Verdünnung des Konzentrats mit Wasser, nach einem der vorangehenden Ansprüchen, mit Wasserzugabe in Verhältnissen von 80% bis 99 % Konzentrats für jeweils 20 % bis 1 % Wasser.

11. Halbflüssige Paste erhalten durch Verdünnung des Konzentrats mit Wasser, nach einem der vorangehenden Ansprüchen, mit Wasserzugabe in Verhältnissen von 70 % bis 80 % Konzentrats für jeweils 30 % bis 20 % Wasser.

12. Emulsion erhalten durch Verdünnung des Konzentrats mit Wasser, nach einem der vorangehenden Ansprüchen, mit Wasserzugabe in Verhältnissen von 45 % bis 70 % Konzentrats für jeweils 55 % bis 30 % Wasser.

13. Wäsrigflüssige und durchsichtigklare isotrope Lösung erhalten durch Verdünnung des Konzentrats mit Wasser, nach einem der vorangehenden Ansprüchen, mit Wasserzugabe in Verhältnissen von 1 % bis 45 % Konzentrats für jeweils 99 % bis 55 % Wasser.

## Claims

1. A hydrosoluble or emulsifiable concentrate of liquid lipophilic materials of vegetable origin **characterized in that** it is obtained by mixing a compound of liquid lipophilic materials of vegetable origin and an emulsifying or hydrosolubilizing phase containing at least two ecologically optimized surfactants in order to show a reduced ecotoxicity and as a matter of fact, contain no sulphate, sulfonate, phosphate or phosphonate group, at least one of which is a non-ionic surfactant originating or deriving from a vegetable oil, and at least another one of which is an additional surfactant including an anionic surfactant originating or deriving from a vegetable oil and/or a non-ionic co-surfactant, which in combination with the liquid lipophilic materials of vegetable origin gets the latter completely hydrosoluble, permitting when water is added, the achievement of either a paste, a micro-emulsion, or a perfectly limpid and stable solution to be obtained when water is added.

2. A concentrate according to claim 1 **characterized in that** the compound of liquid lipophilic materials of vegetable origin includes at least one essential oil.

3. A concentrate according to claim 1 **characterized in that** the non-ionic surfactant originating or deriving from a vegetable oil is an ethoxylated vegetable oil.

4. A concentrate according to the preceding claim **characterized in that** the vegetable oil used is castor oil or any other vegetable oil with a free radical (OH) that can be ethoxylated.

5. A concentrate according to the preceding claim **characterized in that** the anionic surfactant originating from another vegetable oil is derived from an ethoxylated vegetable oil.

6. A concentrate according to claim 1 **characterized in that** the additional anionic surfactant is a mixture of alkyl ethoxyl carboxyl salts resulting from an ethoxylation and carboxylation reaction on vegetable oils.

7. A concentrate according to claim 1 **characterized in that** the non-ionic co-surfactant is a polyol or an alcohol.

8. A concentrate according to the preceding claim **characterized in that** the non-ionic co-surfactant is glycol propylene.

9. A concentrate according to claim 1 **characterized in that** the relative weight proportions between the emulsifying or hydrosolubilizing phase and the compound of lipophilic materials of vegetable origin are at least 2 for 1.

10. An elastic gel obtained by diluting with water the concentrate according to one of the preceding claims by adding water in the proportion of 80% to 99% concentrate for 20% to 1 % water, respectively.

11. A semi-liquid paste obtained by diluting with water the concentrate according to one of the preceding claims by adding water in the proportion of 70% to 80% concentrate for 30% to 20% water, respectively.

12. An emulsion obtained by adding water to the concentrate according to any one of the preceding claims in the proportion of 45% to 70% concentrate for 55% to 30% water, respectively.

13. An isotropic fluid aqueous solution that is transparent and clear obtained by diluting with water the concentrate according to one of the preceding claims by adding water in the proportion of 1 % to 45% concentrate for 99% to 55% water, respectively.
